Europäisches Patentamt

European Patent Office

Office européen des brevets

(19)

(11) Publication number: **0 108 643**
**B1**

(12) **EUROPEAN PATENT SPECIFICATION**

(45) Date of publication of patent specification: **16.12.87**

(21) Application number: **83306783.8**

(22) Date of filing: **08.11.83**

(51) Int. Cl.⁴: **G 01 S 13/78,** G 01 S 17/74,
A 01 K 11/00

(54) Improved animal identification system.

(30) Priority: **09.11.82 AU 6714/82**

(43) Date of publication of application:
**16.05.84 Bulletin 84/20**

(45) Publication of the grant of the patent:
**16.12.87 Bulletin 87/51**

(84) Designated Contracting States:
**BE DE FR GB NL**

(56) References cited:
**EP-A-0 061 373**
**US-A-3 897 753**
**US-A-3 937 880**
**US-A-4 036 178**
**US-A-4 262 632**

(73) Proprietor: **Australian Meat and Live-Stock
Corporation
Aetna Life Tower, Hyde Park Square Corner
Elisabeth and Bathurst Streets
Sydney New South Wales 2000 (AT)**

(72) Inventor: **Yerbury, Michael John
61 Richmond Avenue
St. Ives New South Wales 2000 (AU)**

(74) Representative: **JENSEN & SON
8 Fulwood Place High Holborn
London WC1V 6HG (GB)**

Courier Press, Leamington Spa, England.

## Description

The present invention relates to electronic apparatus for identification of animals. The apparatus is particularly suitable for use as a remote identification system by which . an operator is able to identify a particular animal in a group at a distance of up to approximately thirty metres.

There are known remote identification systems which use electronic tags each having a unique identifying code. The tags are attached to animals, and a remote interrogating unit is used to interrogate each device, and detect and store the identification code transmitted by the interrogated device.

The known remote identification systems use a radio frequency (RF) interrogating signal. Accordingly, the known systems cannot provide an interrogating beam of high directivity, and they suffer from the disadvantages that if a particular animal is to be identified, it must be within about a metre of the interrogator and no other animal carrying such a device should be within this range at the same time.

In the identification system of Australian patent application No. 79571/82, the interrogator transmits a coded RF signal and only the correspondingly coded transponder responds. However, a direction finder is then required to locate the transponder. To identify a particular animal, all possible codes must. be transmitted and the animal must be close to the transmitter.

It is known that directional beams can be obtained by using light radiation instead of radio frequencies. An object identification system using infrared radiation is disclosed in U.S.—A—4,025,791. In the system of this patent, an interrogator emits infrared pulses to activate a transponder on the object to be identified. Upon such activation, the transponder emits in synchronism with the interrogator pulse a unique code in the form of infrared pulses in accordance with a program stored in a recirculating shift register. The system is described with particular application to the identification of automobiles. Such a system however, is not suitable for the identification of animals, such as cattle, for a number of reasons. First, the infrared beams of the known system are not sufficiently narrow to distinguish animals in a herd. The infrared beams generated by the interrogator of the system of U.S.—A—4,025,791 are not true directional beams, and the system does not operate until the vehicle carrying the transponder is in close ·vicinity to the interrogator. Secondly, the transponder carried by the vehicle requires complex and expensive circuitry as it must be able to generate infrared pulses in response to the pulses from the interrogator. This limits the minimum size of the transponder. Thirdly, the transponder requires a relatively large amount of power to perform its functions and its battery must be renewed every six months or so. Such a transponder would not be suitable for use on livestock since its battery should last for the lifetime of the animal, typically ten years.

A highly directional laser beam is used in the weapon training system disclosed in U.S.—A—3,588,108. In this system, a laser is linked to an aiming device such as a sighting telescope before aiming at a target. The system includes a detector on the target for receiving the radiation and an indicator to provide information concerning the accuracy of the aim. The system however, is not an identification system since the detector receiving the laser radiation does not transmit an identifying signal to the operator. Furthermore, due to the complexity and cost of the laser and its associated control means, the system is unsuitable for use for the identification of livestock.

The detector in particular performs a number of functions and its complex circuit requires a significant amount of power. While this does not pose a problem in the weapons training system as it used for short periods only and its battery may be recharged, the battery of a detector used in an animal identification system should last for the life of the animal.

U.S.—A—3,104,478 discloses another hit indicator apparatus, and further improvements and modifications of this apparatus are disclosed in U.S.—A—3,169,191; 3,434,226; 3,466,761 and 3,483,636. In the known hit indicator apparatus, a radio frequency transmitter at the weapon radiates an omnidirectional RF interrogation signal when the firer actuates the trigger of the weapon. All targets within the range of the RF transmitter are interrogated. An infrared transmitter on each target responds to the interrogation signal by radiating omnidirectionally, a coded infrared answer signal which identifies each target. At the weapon, a directional phototelescope responsive to infrared energy and boresighted with the weapon, receives infrared energy only from the particular target at which the weapon is aimed when the trigger is actuated. This system has a number of inherent disadvantages. First, upon transmission of the RF interrogation signal, all targets in the range are interrogated and all infrared transmitters on these targets radiate an infrared signal. Thus, each target transmitter consumes energy from its power supply each time an RF interrogation signal is generated, whether or not that particular target is being sighted. Since the device on the target requires a large power supply to provide sufficient energy for the numerous infrared transmissions, the device does not lend itself to miniaturisation. Furthermore, the device is not suitable for use on livestock as its battery would have to be changed several times during the lifetime of the animal to which it is attached.

The electronics of the detectors of all the above described identification systems are in a continuous "active" state, i.e., drawing current, in order to operate in their "receive" mode. For this reason, the battery life of such detectors is limited.

It is known from EP—A 61373 to provide a remote identification system having an interrogator with a source for generating a narrow directional beam which is directed towards an object to be identified. The particular application is the identification of persons passing through a turnstile. Each person carries a transponder containing a detector for detecting a signal from said source and transmitting means for transmitting a coded signal upon reception of the beam by the detector.

It is an object of the present invention to overcome, or substantially ameliorate, at least one of the above described disadvantages by providing an improved remote identification system having a directional interrogating light beam to enable an operator to identify a particular animal in a group at a distance of up to approximately thirty metres.

According to the present invention, there is provided an animal identification system for the remote identification of animals, said system comprising an interrogator means having a light source for generating a narrow directional beam of light towards the animal to be identified, at least one transponder adapted to be attached to, and carried by a respective animal to be identified, each said transponder having a detector to distinguish between receipt by said transponder of ambient light and said directional beam of light and an electronic circuit means connection to said detector and including a transmitter for transmitting a coded signal upon receipt of said light beam by said transponder, and a receiver for receiving said coded signals characterised in that said signal is a radio frequency signal and said transmitter and receiver are an RF transmitter and RF receiver respectively, said detector has a light detecting surface and is mounted in a non-imaging light concentrator with said light detecting surface being shielded from light rays directly incident upon said concentrator, and said concentrator directing by diffuse reflection light incident thereon onto said light detecting surface.

The light beam preferably has a diameter of not more than one metre at a range of thirty metres. The beam typically takes the form of at least one light pulse having a portion of rapidly increasing light intensity. This portion is detected by the electronic circuit means of the transponder so that the transponder can distinguish between ambient light and the light beam transmitted from the interrogator.

The radio frequency receiver of the interrogator means receives and decodes the coded RF signal transmitted by the selected transponder, and displays identify indicia for that transponder which is derived from the coded RF signal. Preferably, computing means such as a microprocessor, and a keyboard are provided for further processing of the signal transmitted by the transponder.

According to another aspect of the present invention, there is disclosed a transponder for use in an animal identification system, said transponder being adapted to be attached to an animal having a detector to distinguish between receipt by said transponder of ambient light and direction light beam, having an electronic circuit means connected to said detector, and including a transmitter for transmitting a coded signal upon receipt of said light beam by said transponder characterised in that said transmitter is an RF transmitter and said signal is a radio frequency signal and that said detector has a light detecting surface and is mounted in a non-imaging light concentrator with said light detecting surface being shielded from light rays directly incident upon said concentrator, and said concentrator directing by diffuse reflection light incident thereon onto said light detecting surface.

Preferably, the detector is a photovoltaic array housed in a light concentrator which concentrates incident light by refraction onto the surface of the photovoltaic array.

Typically, the electronic circuit means comprises a compensating circuit which automatically adjusts the potential difference at the output of the photovoltaic array in response to variations in ambient light so as to maintain a low voltage at the output. Upon receipt of the portion of the light beam having rapidly increasing light intensity, a sharp voltage pulse is provided at the output of the array and is used to trigger the transmitting circuit to transmit a coded RF signal to the interrogator.

The electronics of the transponder draw negligible current while the transponder is in its receive mode. The transponder is activated only by receipt of the interrogating light beam and, after transmission of its coded RF signal, the transponder returns to a "receive" mode drawing minimal current. Battery life is thus prolonged.

Notwithstanding other forms of the invention, a preferred embodiment thereof will now be described with reference to the accompanying drawings in which:

Fig. 1 is a schematic block diagram of an electronic identification system according to a preferred embodiment of the present invention;

Fig. 2 is a schematic cross-sectional view of the interrogator of Fig. 1;

Fig. 3 is an electrical circuit diagram of the transponder tag of Fig. 1; and

Figs. 4a and 4b are plan and cross-sectional views of a light concentrator for use in the transponder tag of Fig. 1.

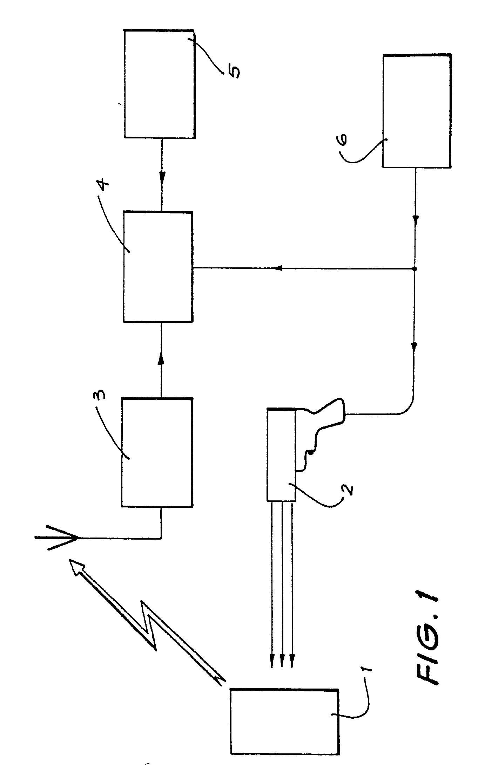

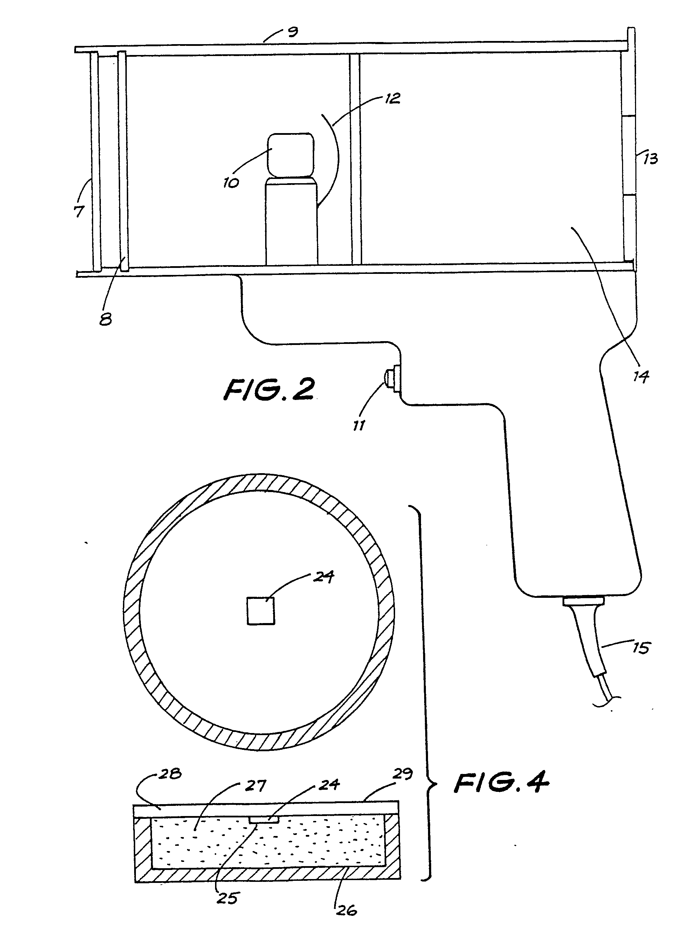

Turning to Fig. 1, the remote identification system of the preferred embodiment comprises an interrogator 2 which generates a narrow beam of light. Preferably, the interrogator has a piston grip for easy handling by a stockman for example, and is powered from a battery 6 via a cable 15 in the handle. The optical interrogator 2 (or "light gun") is shown in more detail in Fig. 2. The interrogator 2 comprises a light source, such as Xenon flash bulb 10, for producing intense pulses of light of short rise time, e.g. less than 1 millisecond and typically approximately 100 microseconds. A reflector 12 placed behind the flash bulb 10 directs the light in a forward direction.

The light is contained within the housing 9 of the gun 2 and focused to a narrow beam by a Fresnel lens 8 which is protected by a transparent plate 7. It will be apparent to those skilled in the art the light source can be any suitable source of radiation known generally as "light" e.g. infrared, laser, visible light. Electronic circuitry and/or power supply is (are) contained in a cavity 14 behind the flash bulb 10, and a display for the identification code is provided on the rear face 13 of the interrogator gun 2. External power is provided via the cable 15 in the handle. The gun 2 is triggered by a switch 11 provided conveniently on the handle grip.

Each animal to be identified carries a transponder in the form of a "tag" 1. The tag 1 contains a photovoltaic array 16 which detects incoming light pulses and converts them to electrical signals. Typically, the interrogator gun 2 modulates the light beam in order to distinguish the interrogating light from the ambient light. Thus, the interrogating light beam is in the form of a short pulse, or short pulses, with sharply increasing intensity. The light from the interrogator gun 2 is concentrated in a two degree beam which illuminates approximately a one metre diameter area at a distance of 30 metres. It will be apparent that the interrogating light beam generated by the interrogator gun 2 is highly directional thereby enabling selected animals in a herd to be identified at remote distances. Moreover, the directional light beam can be obtained with a simple and inexpensive arrangement.

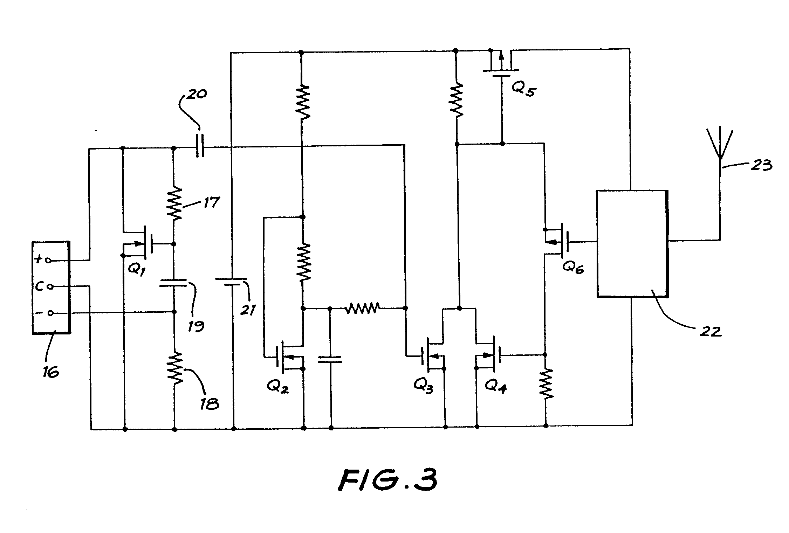

A circuit diagram of the tag electronics is shown in Fig. 3. Ambient light, such as sunlight, is concentrated onto a photovoltaic array 16 which has a centre tap giving equal positive and negative outputs. The output photocurrent of the photovoltaic array 16 due to ambient light is diverted into transistor Q1 which automatically adjusts its operating point so as to maintain a low potential difference across the photovoltaic array 16, thereby preventing saturation of the array 16 due to high ambient light levels. When a rapidly rising light pulse from the interrogator gun 2 impinges on the photovoltaic array 16, the potential difference across the output of the array rises rapidly in response as the transistor Q1 is prevented from suppressing this change due to resistors 17 and 18, and capacitor 19. The sharp rise in the potential difference is transferred through capacitor 20 to a trigger circuit including a transistor Q3 which is held near to its threshold by a bias circuit incorporating transistor Q2. A latch circuit having transistors Q4 and Q5 then connects a battery cell 21 to a radio transmitter, code generator and timer 22 which radiates a coded signal from antenna 23. Upon completion of the response, transistor Q6 is used to reset the latch circuit which disconnects power to the transmitter and returns the tag to its "receive" mode, in which only minimal leakage current is drawn from the tag battery cell 21.

The tag circuitry is activated only by the detection of a sufficiently strong interrogating light pulse, i.e., the interrogating light pulse provides the stimulus to activate the tag transponder, but only the sighted tag transponder is activated, energy being conserved in the others.

The coded signal transmitted by the activated tag transponder is received by a radio receiver 3 which detects and decodes the transmitted signal. The decoded signal is then displayed and/or passed to a computing circuit such as a microprocessor 4 for further processing and/or storage. The operator is able to interact with the microprocessor 4 via keyboard 5, e.g. additional information may be added to the stored identification signal.

It will be apparent to those skilled in the art that the tag electronics can be integrated. Furthermore, a rechargeable energy storage device such as a capacitor can be used to store energy derived from ambient sunlight and provide such energy to the transmitter when required, thereby prolonging battery life.

Preferably, each tag transponder includes a non-imaging light concentrator, as shown in Fig. 4 for example. In the light concentrator, a photovoltaic array 24 is arranged so that its active surface 25 faces away from the direction of the primary incident light. The cup-shaped concentrator has a diffuse white internal surface 26, and contains a filling 27 typically of transparent epoxy or plastic. A transparent upper sheet 28 is placed across the top of the concentrator and supports the array 24. In operation, light incident upon the upper surface 29 of the concentrator is refracted from wide angles of incidence into the concentrator, and then diffusely reflected from the surface 26. Some of this diffuse radiation falls directly onto the array surface 25, some is totally internally reflected, and some escapes from the concentrator. A modest concentrating effect is produced whilst at the same time the array produces a slow response to a shadow moving across the concentrator when it is being illuminated by direct sunlight. Thus, spurious triggering of the tag electronics is eliminated.

The electronic identification is particularly, but not solely, suitable for use on animals such as livestock. A tag transponder is attached to each animal to be identified, and the operator (farmer, stockman, etc.) is able to identify animals up to thirty metres away merely by pointing the interrogating gun at the selected animal and pressing the switch 11. When the interrogating beam generated by the interrogating gun strikes the tag transponder on the selected animal, a coded identification signal is transmitted, received and decoded to provide the operator with an indication of the identity of the animal.

## Claims

1. An animal identification system for the remote identification of animals, said system comprising an interrogator means (2) having a light source (10) for generating a narrow directional beam of light towards the animal to be identified, at least one transponder (1) adapted to be attached to, and carried by a respective animal to be identified, each said transponder (1) having a detector (24) to distinguish between receipt by said transponder of ambient light and said directional beam of light and an electronic circuit means connected to said detector and including a transmitter (22) for transmitting a coded signal upon receipt of said light beam by said transponder, and a receiver (3) for receiving said coded signals characterised in that said signal is a radio frequency signal and said transmitter and receiver are an RF transmitter and RF receiver respectively, said detector has a light detecting surface (25) and is mounted in a non-imaging light concentrator (26) with said light detecting surface (25) being shielded from light rays directly incident upon said concentrator, and said concentrator directing by diffuse reflection light incident thereon onto said light detecting surface (25).

2. A system as claimed in claim 1 wherein said non-imaging light concentrator comprises a cavity having a diffuse, at least partly reflecting surface (26), said detector having a back and front with said front comprising said light detecting surface and being mounted with said back facing away from said cavity and said front facing towards said cavity.

3. A system as claimed in claim 1 or 2 wherein said interrogator means is hand held by an operator who directs said light beam towards the animal to be identified.

4. A system as claimed in any one of the preceding claims, wherein said beam comprises at least one light pulse having a portion of rapidly increasing light intensity, said electronic circuit means being responsive to the portion of rapidly increasing light intensity to enable said detector to distinguish between said light beam and ambient light.

5. A system as claimed in any one of the preceding claims further comprising electronic storage means (4) connected to said radio frequency receiver for storing the coded RF signal transmitted by a transponder, and electronic display means for displaying identity indicia for the selected object, said identity indicia being derived from said coded RF signal.

6. A system as claimed in claim 5 further comprising computing means (4) connected to said RF receiver for processing the coded RF signal.

7. A system as claimed in any one of the preceding claims, wherein said light beam has a diameter of not more than one metre at a range of thirty metres from said light source.

8. A transponder for an animal identification system for the remote identification of animals, said transponder (1) being adapted to be attached to, and carried by, an animal having a detector (24) to distinguish between receipt by said transponder of ambient light and a directional light beam, having an electronic circuit means connected to said detector and including a transmitter for transmitting a coded signal upon receipt of said light beam by said transponder characterised in that said transmitter is an RF transmitter (22) and said signal is a radio frequency signal and that said detector has a light detecting surface (25) and is mounted in a non-imaging light concentrator (26) with said light detecting surface (25) being shielded from light rays directly incident upon said concentrator, and said concentrator directing by diffuse reflection light incident thereon onto said light detecting surface (25).

9. A transponder as claimed in claim 8 wherein said non-imaging light concentrator comprises a cavity having a diffuse, at least partly reflecting surface (26), said detector having a back and a front with said front comprising said light detecting surface and being mounted with said back facing away from said cavity and said front facing towards said cavity.

10. A transponder as claimed in claim 8 or 9 wherein said light beam comprises at least one light pulse having a portion of rapidly increasing light intensity, said electronic circuit means is responsive to the portion of rapidly increasing light intensity to distinguish between said light beam and ambient light.

11. A transponder as claimed in claim 10 wherein said light detecting surface comprises a photovoltaic array (24).

12. A transponder as claimed in claim 11, wherein said electronic circuit comprises a compensating circuit (Q1) for automatically adjusting the potential difference at the output of the photovoltaic array in response to gradual variations in ambient light in order to maintain a low potential difference at the output of the array, and a triggering circuit (Q3) responsive to a rapid increase in potential difference at the output of the array for triggering the transmission of said transmitter.

13. A transponder as claimed in claim 11 or 12, further comprising a rechargeable energy storage device, said rechargeable energy storage device being charged by the output of said photovoltaic array due to the incidence thereon of ambient light, said rechargeable energy storage device being used to power said transmitting means.

**Patentansprüche**

1. Tieridentifizierungssystem zur Fernidentifizierung von Tieren, das aufweist, eine Abfragesendeeinrichtung (2) mit einer Lichtquelle (10) zur Erzeugung eines engen gerichteten Lichtstrahls in Richtung auf das zu identifizierende Tier, zumindest einem Antwortsender (1), der an dem Tier angebracht werden kann und von dem entsprechenden zu identifizierenden Tier getragen wird, wobei jeder Antwortsender (1) einen Detektor (24) zur Unterscheidung zwischen vom Antwortsender empfangenen Umgebungslicht und dem gerichteten Lichtstrahl und eine elektronische Schaltungseinrichtung aufweist, die mit dem Detektor verbunden ist und einen Sender (22) zum Aussenden eines codierten Signals beim Empfang des Lichtstrahls durch den Antwortsender einschließt, und einen Empfänger (3) zum Empfang des codierten Signals, dadurch gekennzeichnet, daß das Signal ein Radiofrequenzsignal ist und daß Sender und Empfänger Radiofrequenzsender bzw. -empfänger sind, der Detektor eine lichtdetektierende Fläche (25) aufweist und in einem nicht abbildenden Lichtstammler (26) befestigt ist, wobei die lichtdetektierende Fläche (25) gegen direkt auf den Lichtsammler einfallende Lichtstrahlen abgeschirmt ist, und daß der Sammler in ihn einfallendes Licht durch diffuse Reflexion auf die lichtdetektierende Fläche (25) richtet.

2. System nach Anspruch 1, dadurch gekennzeichnet, daß der nicht abbildende Lichtsammler einen Hohlraum aufweist, mit einer diffusen, zumindest teilweise reflektierenden Oberfläche (26) und daß der Detektor eine Vorder- und eine Rückseite aufweist, wobei die Vorderseite die lichtdetektierende Fläche enthält und der Detektor mit der Rückseite vom Hohlraum weggerichtet und mit der Vorderseite auf den Hohlraum gerichtet befestigt ist.

3. System nach Anspruch 1 oder 2, dadurch gekennzeichnet, daß die Abfragesendeeinrichtung von einem Bediener in der Hand gehalten wird, der den Lichtstrahl auf das zu identifizierende Tier richtet.

4. System nach einem der vorstehenden Ansprüche, dadurch gekennzeichnet, daß der Strahl zumindest einen Lichtpuls mit einem Teil schnell ansteigender Lichtintensität aufweist, daß die elektronische Schaltungseinrichtung auf den Teil mit schnell ansteigender Lichtintensität reagiert, wodurch der Detektor zwischen dem Lichtstrahl und dem Umgebungslicht unterscheiden kann.

5. System nach einem der vorstehenden Ansprüche, ferner gekennzeichnet durch mit dem Radiofrequenzempfänger verbundene elektronische Speichermittel (4) zur Speicherung des von einem Antwortsender übertragenen codierten Radiofrequenzsignals, und elektronische Anzeigemittel zur Anzeige von Identitätsmerkmalen des ausgewählten Objekts, wobei die Identitätsmerkmale aus dem codierten Radiofrequenzsignal abgeleitet sind.

6. System nach Anspruch 5, gekennzeichnet durch eine mit dem Radiofrequenzempfänger verbundene Rechnereinrichtung (4) zur Verarbeitung des codierten Radiofrequenzsignals.

7. System nach einem der vorstehenden Ansprüche, dadurch gekennzeichnet, daß der Lichtstrahl einen Durchmesser von nicht mehr als einem Meter in einem Bereich von 30 Metern von der Lichtquelle aufweist.

8. Antwortsender für ein Tieridentifizierungssystem zur Fernidentifizierung von Tieren, wobei der Anwortsender (1), der an einem Tier angebracht werden kann und von ihm getragen wird, einen Detektor (24) zur Unterscheidung zwischen Umgebungslicht und einem gerichteten Lichtstrahl beim Empfang durch den Antwortsender aufweist und eine elektronische Schaltungseinrichtung mit dem Detektor verbunden ist und einen Sender einschließt zum Senden eines codierten Signales bei Empfang des Lichtstrahls durch den Antwortsender, dadurch gekennzeichnet, daß der Sender ein Radiofrequenzsender (22) und das Signal ein Radiofrequenzsignal ist und daß der Detektor eine lichtdetektierende Fläche (25) aufweist und in einem nicht abbildenden Lichtsammler (26) befestigt ist, wobei die lichtdetektierende Fläche (25) von direkt in den Sammler einfallenden Lichtstahlen abgeschirmt ist und der Sammler in ihn einfallendes Licht durch diffuse Reflexion auf die lichtdetektierende Fläche (25) richtet.

9. Antwortsender nach Anspruch 8, dadurch gekennzeichnet, daß der nicht abbildende Lichtsammler einen Hohlraum aufweist, mit einer diffusen, zumindest teilweise reflektierenden Fläche (26), der Detektor eine Rück- und eine Vorderseite hat, wobei die Vorderseite die lichtdetektierende Fläche einschließt und der Detektor mit der Rückseite vom Hohlraum weggerichtet und mit der Vorderseite auf den Hohlraum gerichtet angeordnet ist.

10. Antwortsender nach Anspruch 8 oder 9, dadurch gekennzeichnet, daß der Lichtstrahl zumindest einen Lichtpuls mit einem Teil schnell ansteigender Lichtintensität aufweist, wobei die elektronische Schaltungseinrichtung auf den Anteil mit schnell ansteigender Lichtintensität reagiert, um zwischen dem Lichtstrahl und dem Umgebungslicht zu unterscheiden.

11. Antwortsender nach Anspruch 10, dadurch gekennzeichnet, daß die lichtdetektierende Fläche eine foto-voltaische Anordnung (24) aufweist.

12. Antwortsender nach Anspruch 11, dadurch gekennzeichnet, daß die elektronische Schaltung eine Kompensationsschaltung (Q1) zum automatischen Einstellen der Potentialdifferenz am Ausgang der foto-voltaischen Anordnung in Abhängigkeit von allmählichen Änderungen das Umgebungslichts zur Aufrechterhaltung einer niedrigen Potentialdifferenz am Ausgang der Anordnung und eine Triggerschaltung (Q3) aufweist, die zum triggern des Sendens des Senders auf ein schnelles Ansteigen der Potentialdifferenz am Ausgang der Anordnung reagiert.

13. Antwortsender nach Anspruch 11 oder 12, ferner gekennzeichnet, durch eine aufladbare Energiespeichervorrichtung, die durch das Ausgangssignal der foto-voltaischen Anordnung während des Einfalls von Umgebungslicht aufgeladen wird und zum Betreiben der Sendereinrichtung verwendet wird.

**Revendications**

1. Un système d'identification d'animal pour l'identification à distance d'animaux, ce système comprenant un moyen d'interrogation (2) comportant une source de lumière générant un faisceau étroit et directionnel de lumière vers l'animal à identifier, au moins un transpondeur (1) prévu pour être attaché à et porté par l'animal à identifier correspondant, chacun de ces transpondeurs (1) comportant un détecteur (24) permettant de faire la distinction entre la lumière ambiante et le faisceau lumineux directionnel, et un circuit électronique, relié à ce détecteur, comprenant un émetteur (22), destiné à émettre un signal codé à réception de ce faisceau lumineux par la transpondeur, et un récepteur (3) pour capter ces signaux codés, caractérisé en ce que le signal est une signal à fréquence radio et l'émetteur et le récepteur sont respectivement un émetteur FR et le récepteur FR, et en ce que le détecteur comporte une surface sensible à la lumière (25) et est monté dans une focalisateur de lumière (26) de façon que la surface sensible (25) soit protégée des rayons lumineux à incidence directe sur le focalisateur, le dit focalisateur dirigeant, par réflection diffusante, la lumière incidente sur cette surface sensible.

2. Un système selon la revendication 1 dans lequel le focalisateur de lumière comporte une alvéole ayant une surface diffusante, au moins partiellement réfléchissante (26), ce détecteur comportant un arrière et un avant, cet avant comprenant la surface sensible à la lumière et étant monté avec l'arrière orienté vers l'extérieur de cette alvéole, et le dit avant étant orienté vers la dite alvéole.

3. Un système selon la revendication 1 ou 2 dans lequel ce moyen d'interrogation est tenu, à la main, par un opérateur qui dirige le faisceau de lumière vers l'animal à identifier.

4. Un système selon l'une quelconque des revendications précédentes, dans lequel le faisceau lumineux comprend au moins une impulsion lumineuse comportant une fraction d'augmentation rapide de l'intensité lumineuse, le circuit électronique étant sensible à cette fraction d'augmentation rapide de l'intensité lumineuse, de façon à permettre au détecteur de distinguer le faisceau lumineux de la lumière ambiante.

5. Un système selon l'une quelconque des revendications précédentes comprenant, de plus, une mémoire électronique (4), reliée au récepteur à fréquence radio pour mémoriser le signal FR codé transmis par le transpondeur, et un affichage électronique pour afficher le code d'identification de l'objet sélectionné, ce code d'identification étant dérivé de ce signal FR codé.

6. Un système selon la revendication 5 comprenant des moyens de traîtement reliés au récepteur FR pour traîter le signal FR codé.

7. Un système selon l'une quelconque des revendications précédentes dans lequel le faisceau de lumière a un diamètre qui n'est pas supérieur à un mètre à une distance de 30 mètres de la source lumineuse.

8. Un transpondeur pour un système d'identification d'animal pour l'identification à distance d'animaux, ce transpondeur (1) étant prévu pour être attaché à et porté par un animal, comportant un détecteur (24) permettant de faire la distinction entre la lumière ambiante reçue par le transpondeur et le faisceau de lumière directionnel, comportant un circuit électronique relié à ce détecteur et comprenant un émetteur destiné à émettre un signal codé à réception de ces faisceau lumineux par le transpondeur, caractérisé en ce que l'émetteur est un émetteur FR (22) dont le signal est à fréquence radio, et en ce que le détecteur comporte une surface sensible à la lumière (25) et est monté dans un focalisateur de lumière (26), de façon que la surface sensible à la lumière (25) soit protégée des rayons lumineux à incidence directe sur le focalisateur, le dit focalisateur dirigeant, par réflexion diffusante, la lumière incidente sur cette surface sensible (25).

9. Un transpondeur selon la revendication 8 dans lequel le focalisateur de lumière comporte une alvéole ayant une surface diffusante (26) au moins partiellement réfléchissante, ce détecteur comportant un arrière et un avant, cet avant comprenant la surface sensible à la lumière (25) et étant monté avec l'arrière orienté vers l'extérieur de cette alvéole, et le dit avant étant orienté vers la dite alvéole.

10. Un transpondeur selon la revendication 8 ou 9 dans lequel le faisceau lumineux comprend au moins une impulsion lumineuse comportant une fraction d'augmentation rapide de l'intensité lumineuse, le circuit électronique est sensible à cette période d'augmentation rapide de l'intensité lumineuse, de façon à distinguer le faisceau lumineux de la lumière ambiante.

11. Un transpondeur selon la revendication 10, dans lequel la surface sensible à la lumière comprend un dispositif photovoltaïque (24).

12. Un transpondeur selon la revendication 11, dans lequel le circuit électronique comprend un circuit de compensation (Q1) pour l'ajustement automatique de la différence de potentiel à la sortie du dispositif photovoltaïque en réponse aux variations progressives de la lumière ambiante, de façon à maintenir une faible différence de potentiel à la sortie du dispositif photovoltaïque, et un circuit de déclenchement (Q3) sensible à une augmentation rapide de la différence de potentiel à la sortie du dispositif pour déclencher l'émission par l'émetteur.

13. Un transpondeur selon la revendication 11 ou 12, comportant, de plus, un moyen d'accumulation d'énergie, ce moyen d'accumulation d'énergie étant alimenté par la sortie du dispositif photovoltaïque due à la lumière ambiante incidente, ce moyen de stockage d'énergie rechargeable étant utilisé pour alimenter en énergie les moyens de transmission.

*FIG.1*

FIG.2

FIG.4

FIG.3